# EUROPEAN PATENT APPLICATION

(11) **EP 3 511 599 A1**
(43) Date of publication of application: **17.07.2019**
(21) Application number: 17860993.9
(22) Date of filing: 01.09.2017
(51) Int. Cl.: F16K 27/00, F16K 27/04, F16K 27/10

(54) **GATE VALVE STRUCTURE AND PRODUCTION METHOD THEREFOR**

(30) Priority: 11.10.2016 JP 2016199813
(71) Applicant: TIX-IKS Corporation, Tokyo 141-0032 (JP)
(72) Inventor: SHINBO Susumu, Tokyo 108-0014 (JP)
(74) Representative: Intellectual Property Services GmbH
(86) International application number: PCT/JP2017/031626
(87) International publication number: WO 2018/070140

(57) **Abstract**

With the simple cylindrical body shape of gate valves that are currently on the market, the welded portions have three-dimensionally curved shapes and welding is difficult for general purpose welding machines. Moreover, in manufacture by casting, there are many defects in the material such as cavities and sand trapping, and man-hours and cost are necessary to repair same. In the gate valve according to the present invention, a body has openings to accommodate two connecting pipes and a gate. The two connecting pipes respectively pass through the two openings and are disposed so as to face the gate from two sides. The two connecting pipes are each joined to the body by welding at an opening and the shape of said welded sections is a circular ring. Moreover, when producing the body in the present invention, the body portion is manufactured by forging instead of casting and after machining, is unified by welding.

## Description

### CROSS REFERENCE TO RELATED APPLICATION

This application is based upon and claims the benefit of the priority from Japanese Patent Application No. 2016-199813 filed on October 11, 2016, the entire contents of which are incorporated herein by reference.

### TECHNICAL FIELD

The present invention relates to a gate valve structure and a production method therefor, among valves that control a flow of, for example, a pipeline for conveying liquid or gas, geothermal steam, and a fluid to be used in a plant.

### BACKGROUND ART

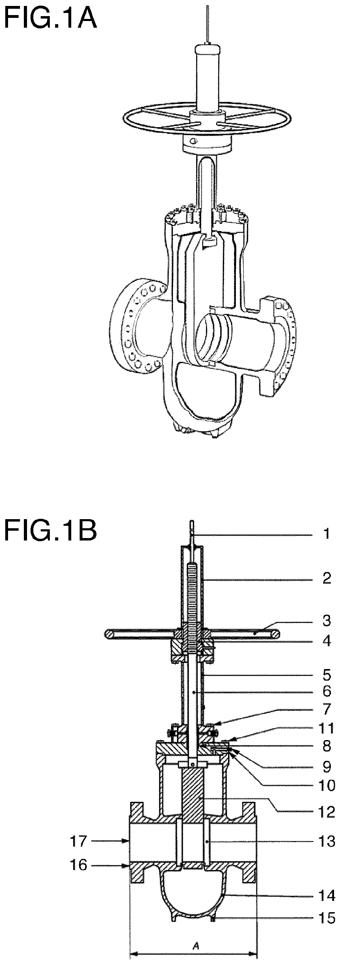

The shape and structure of a conventional gate valve are illustrated in FIGS. 1A and 1B. For use under low pressure, a body has a flat cylindrical shape or a box shape, as the smallest shape covering a gate. For use in which high pressure is applied, in order to reduce occurrence of stress in valve materials, a connecting pipe portion 17 and a body 14 are generally cylindrical in shape. In order to dispose a gate 12 so as to be orthogonal to the cylindrical axis of the connecting pipe portion 17 and move the gate up and down in the body 14, the body 14 is cylindrical in shape thicker than the connection pipe 17 and orthogonal to the connection pipe 17.

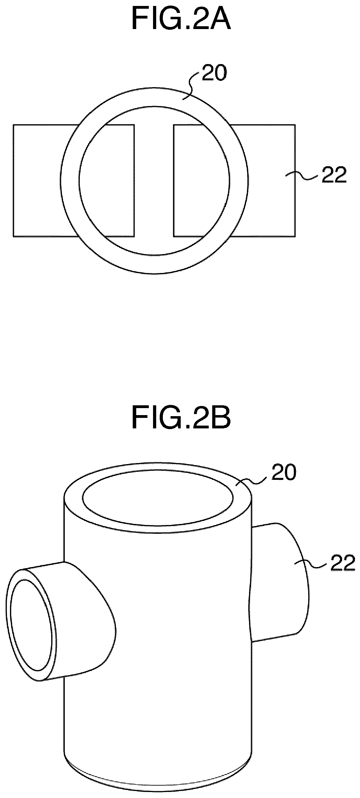

As illustrated in FIGS. 2A and 2B, the body is generally produced by casting because the body has a complicated shape with the combination of two cylinders 20 and 22. However, in the casting processing, a defect occurs in materials, such as voids and sand entrainment. In order to reduce such a defect, it is necessary to use the same amount of a riser (molten metal) as the product. As a result, increase in raw materials of the riser and occurrence of waste of raw materials of fuels for heating the raw materials of the riser cause increase in cost (Patent Literature 1 and Non Patent Literature 1). In the production of the gate valve, the approximate shape of the body is fabricated by casting; the inside of a pipe serving as a path and a site at which a gate segment and accessory parts are to be disposed are machined; and the gate segment and a valve head separately fabricated are combined to complete the product.

### CITATION LIST

### PATENT LITERATURE

PATENT LITERATURE 1: JP-A-H10-291065
PATENT LITERATURE 2: JP-A-2014-065058

### NON PATENT LITERATURE

NON PATENT LITERATURE 1: FY2013 The Strategic Core Technology Advancement Program "Development of Casting Method with New Riser that Improves Casting Yield by 10% or more" issued by Chubu Bureau of Economy, Trade and Industry, (http://www.chusho.meti.go.jp/keiei/sapoin/portal/seika/2012/24142110052.pdf)
NON PATENT LITERATURE 2: Japan Electric Association Code JEAC 3706 4.5.5 (1)

### SUMMARY OF INVENTION

### TECHNICAL PROBLEM

As described in the background art of Patent Literature 2, in casting, many defects occurs, such as voids and sand entrainment in the material. As a result, there is a disadvantage that the repair requires man-hours and expense and production delivery date is extended due to additional process of machine cutting. Furthermore, in casting, some product standards require radiological inspection for all parts that can be subjected to the radiation inspection. As a result, there is also a disadvantage that the radiological inspection requires a large number of man-hours (Non Patent Literature 2).

### SOLUTION TO PROBLEM

In order to solve the above problems, according to the present invention, members are fabricated by forging instead of casting and integrated by welding after machining, in production of a body. In forging, sand is not used during the processing, so that a defect due to sand entrainment does not occur. A steel material before forging has less voids than those in casting, and even if voids are present, hot forging enables reduction of the voids that are negligible for a detect.

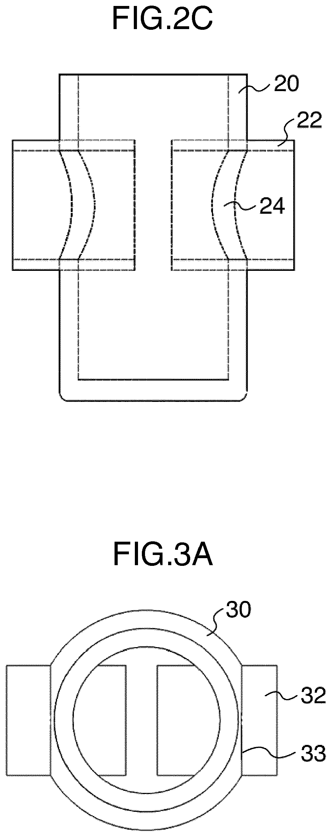

However, when the body shape of a gate valve currently commercially available illustrated in FIGS. 2A and 2B is produced by welding members 20 and 22 each having a simple cylindrical structure, as illustrated in FIG. 2C, a weld portion 24 has a special shape that makes welding difficult. That is, when viewed from the axial direction of a connection pipe (member 22 having a cylindrical structure), the weld portion 24 is circular. However, when viewed from a direction perpendicular to the axis of the connection pipe, the weld portion 24 has a three-dimensional curved shape as illustrated in FIG. 2C. When the weld portion 24 is welded with a general-purpose welding machine having a rotary stage, the weld portion 24 is set such that the rotary shaft of the stage agrees with the cylindrical axis of the connection pipe. However, as the stage rotates, the distance from the welding point and the stage face varies. Thus, the welding head needs to moves up and down and the thickness of the weld also varies. Such variation in thickness of the weld applies restriction to welding conditions such as uniform thickness by changing the welding speed, so that welding implement is made difficult.

Furthermore, when radiological inspection is implemented on the weld portion, it is difficult to keep the depth direction of the weld and the direction of radiation transmission constant. As a result, contrast variation occurs other than a welding defect, thereby arising a disadvantage that the variation lowers the detection sensitivity. The dimensions from a flange 16 of the gate valve to another flange on the opposite side of the gate valve illustrated in FIGS. 1A and 1B are made in accordance with international standards such as American Petroleum Institute. Thus, the body cannot be made large optionally. If the entire body is spherical, the length from the flange to the other flange is larger than such a standard.

Another object of the present invention is to provide a structure of a body for making the shape of a weld portion simple.

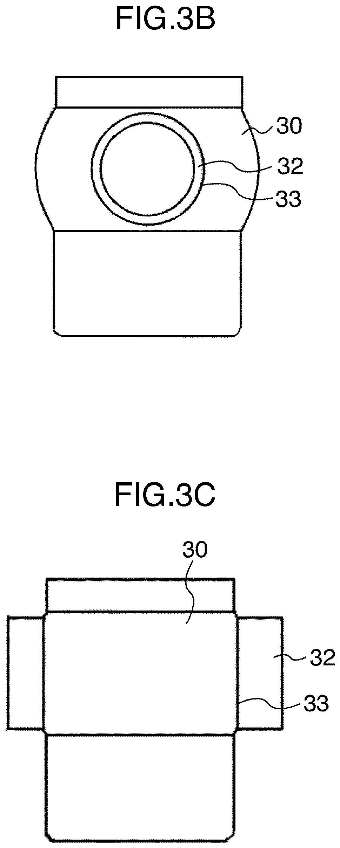

According to the present invention, as illustrated in FIG. 3A, a circumferential portion 30 of a site of the body at which a connection pipe 32 is welded has part of a sphere in shape, and any portion in a weld portion 33 has the same circular-ring shape. As a result, the shape of the weld portion 33 is on a plane as can be seen from FIGS. 3A and 3C, and as illustrated in FIG. 3B, the shape is uniform at any portion in the weld portion 33 (that is, circular). Thus, the weld portion 33 can be welded with a commercially available welding machine having a rotary stage. Furthermore, according to the present invention, in production of the gate valve body, producing a plurality of divided parts of the body facilitates forging.

### ADVANTAGEOUS EFFECTS OF INVENTION

Making the shape of the weld portion a simple circular-ring enables mass production with a general-purpose welding machine. In radiological inspection of the weld portion, there is no factor causing contrast variation other than a welding defect, and ordinary radiological inspection is implementable.

Production by forging enables reduction of cost for repair work due to elimination of disadvantage on casting leakage and enables shortening of the work period due to elimination of rework. Since a riser is unnecessary for forging, forging consumes less materials than casting and the less consumption enables cost reduction. In defect inspection for casting, radiological inspection is required for all parts that can be subjected to the radiological inspection. However, forging facilitates non-destructive inspection including the radiological inspection for the weld portion. Alternatively, such an inspection can be omitted.

In addition, for use under a high internal pressure, the body having a spherical shape withstands such a high pressure and enables reduction of the thickness of the materials of the container.

As described above, the weld portion is formed in the simple circular-ring shape and the body is produced with the plurality of divided parts of the body by forging, so that the body of the gate valve can be produced with high reliability at low cost.

Other objects, features and advantages of the present invention will be apparent from the following description of embodiments of the present invention with reference to the accompanying drawings.

### BRIEF DESCRIPTION OF DRAWINGS

FIG. 1A is a perspective view of a structure of a conventional gate valve (a portion of a body, a connection pipe, or the like is not given).
FIG. 1B is a cross-sectional view of the conventional gate valve.
FIG. 2A is a top view of a joint portion between a cylindrical body and a connecting pipe portion of a conventional cast gate valve.
FIG. 2B is a perspective view of the joint portion between the cylindrical body and the connecting pipe portion of the conventional cast gate valve.
FIG. 2C is a cross-sectional view of the joint portion between the cylindrical body and the connecting pipe portion of the conventional cast gate valve.
FIG. 3A is a top view of a joint portion between a spherical body and a connecting pipe portion according to the present invention.
FIG. 3B is a side view of the joint portion between the spherical body and the connecting pipe portion according to the present invention.
FIG. 3C is a front view of the joint portion between the spherical body and the connecting pipe portion according to the present invention.
FIG. 4A is a divided view of a body spherical portion according to the present invention.
FIG. 4B is a welded view of the body spherical portion according to the present invention.
FIG. 4C is a processed view of the spherical portion according to the present invention.
FIG. 4D is a welded view of a connecting pipe portion and a connection pipe according to the present invention.
FIG. 4E is a welded view of the connecting pipe portion and a body lower portion according to the present invention.
FIG. 5 is a cross-sectional view of a connection pipe weld portion according to the present invention at non-destructive inspection.

### FIRST EMBODIMENT

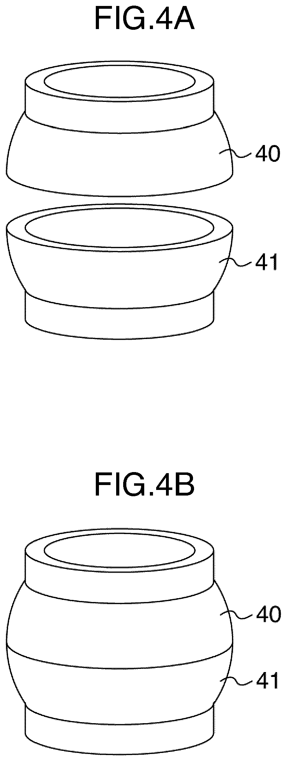

When a body is fabricated by forging, a body having an axially symmetric shape can be easily produced by ring forging and die forging. However, both ring forging and die forging are difficult to from a thin body or a body having a large length/diameter ratio. In order to facilitate forging, as illustrated in FIG. 4A, a body is divided at a connecting pipe portion to reduce the length/diameter ratio. Dividing the body enables die forging of a bulge of a body central portion and use of materials close to the final form, so that material cost can be reduced.

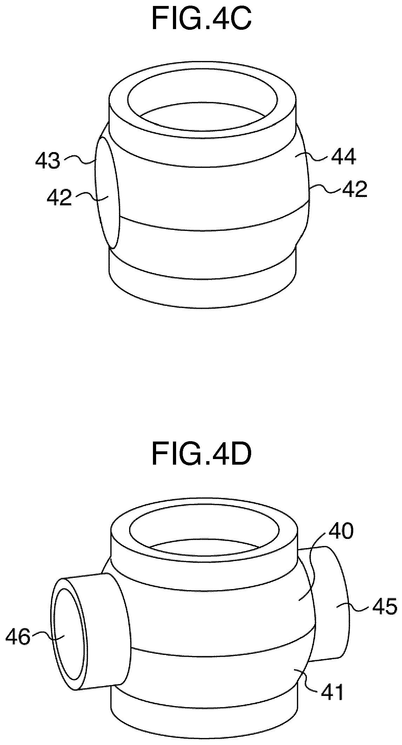

A steel material with 0.1 to 0.4% carbon is used and body portions 40 and 41 are hot forged at 1000 to 1500°C. Then, heat treatment (quenching and annealing) is performed as necessary. The hemispherical body portions 40 and 41 are welded as illustrated in FIG. 4B, and then openings 42 for inserting a connection pipe are fabricated both sides of the body, respectively by machining (FIG. 4C). For example, each opening 42 is machined by cutting into a circular shape and cutting as it is with a U-axis machining center.

Next, as illustrate in FIG. 4D, connection pipes 45 and 46 are respectively inserted into the fabricated openings 42 opposed to each other and then welded. At this time, since a circumferential portion 44 at which a connection pipe of the body is to be inserted is formed in a spherical shape, a weld portion 43 has a circular-ring shape in a horizontal plane. Therefore, just maintaining the angle of the welding torch and the workpiece of interest at a constant angle and rotating the workpiece of interest in the horizontal plane enables easy welding. Note that, in order to make the shape of a weld portion a circular-ring shape in the horizontal plane, in addition to making the shape of the circumferential portion 44 spherical, the circumferential portion 44 may be made into a circular cone shape at which the rotary shaft agrees with the axis of the connection pipe, or may be into a different curved shape at which the rotary shaft agrees with the axis of the connection pipe.

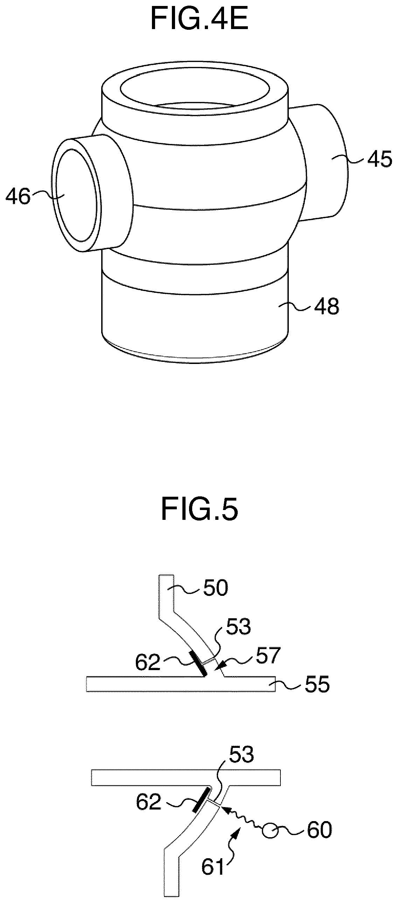

Next, as illustrated in FIG. 4E, a portion 48 to be the bottom of the body is welded, and finally a portion to receive a bolt of a valve bonnet 10 is welded (not illustrated). After the body welding, heat treatment is performed for stress relaxation if necessary. Examples of the welding of the present embodiment can be used include tungsten insert gas (TIG) welding, metal insert gas arc (MIG) welding, metal active gas (MAG) welding, and submerged welding.

After the body welding is completed, in order to fit a gate segment part, the opposing cylindrical portions of the connection pipe 22 inserted in FIG. 4D is machined with the U-axis machining center so as to have predetermined spacing, shape, and surface roughness (not illustrated). Then, parts such as a gate 12, the bonnet 10, and a stem 6 separately produced are assembled to complete a gate valve.

### SECOND EMBODIMENT

In the present invention, a weld portion of a connection pipe may be made as illustrated in FIG. 5. That is, a protrusion 57 having a ring shape is integrally formed with a connection pipe outside the connection pipe 55 in a shape forming part of a body spherical portion. A boundary between the outer circumference of the protrusion 57 and an opening fabricated so as to match the outer circumference of the protrusion 57 is included in a weld portion 53. Protruding the protrusion 57 by 2 cm or more outside the connection pipe, at radiological inspection, facilitates irradiation of the weld portion 53 with radiation 61 from a radiation source 60 and fixing, inside the body, a photosensitive film 62 for radiological inspection. As a result, the radiological inspection can be easily performed.

Although the above description has been made with reference to the embodiments, it should be understood by those skilled in the art that the present invention is not limited the embodiments and that various changes and modifications can be made within the spirit of the present invention and the scope of the attached claims.

### REFERENCE SIGNS LIST

1 STEM INDICATOR
2 STEM COVER
3 HAND WHEEL
4 YOKE NUT
5 YOKE
6 STEM
7 YOKE BOLT
8 STEM PACKING
9 RELIEF VALVE
10 BONNET
11 BONNET BOLT
12 GATE
13 SEAT RING
14 BODY
15 LEG
16 FLANGE
17, 22, 32, 45, 46, 55 CONNECTION PIPE
20, 50 BODY
30, 44 CIRCUMFERENTIAL PORTION OF SITE OF BODY AT WHICH WELDING IS PERFORMED
33, 43, 53 WELD PORTION
40,41 BODY PORTION
42 OPENING
57 PROTRUSION
60 RADIATION SOURCE
61 RADIATION
62 FILM

## Claims

1. A gate valve comprising:
a hand wheel, a stem, a gate, a body, and two connection pipes, the gate valve being configured to control a flow of a fluid, wherein
the body has a first opening and a second opening for accommodating each of the two connection pipes, and a third opening for accommodating the gate, each of the two connection pipes passes through the first opening and the second opening, the two connection pipes being disposed opposed from both sides of the gate,
each of the two connection pipes is jointed to the body by welding at the first opening and the second opening and
each weld portion has a circular-ring shape.

2. The gate valve according to claim 1, wherein at least a circumferential portion of the first opening and the second opening of the body has part of a sphere in shape.

3. The gate valve according to claim 1, wherein at a circumferential portion of the first opening and the second opening of the body has part of a circular cone in shape.

4. The gate valve according to claims 1 to 3, wherein protrusions each having a circular-ring shape are provided on outer circumference of each of the two connection pipes near the first opening and the second opening, the circular-ring shape is configured such that an outer circumference of the protrusion matches to corresponding opening, and a boundary between the outer circumference of the protrusion and the opening is the weld portion.

5. A method for producing a gate valve including: a hand wheel, a stem, a gate, a body, and two connection pipes, the gate valve being configured to control a flow of a fluid,
the method comprising:
producing a plurality of divided body portions of the body by forging;
welding the plurality of divided body portions to form the body;
forming first and second openings each having a circular-ring shape on a side face of the body to allow disposition of the two connection pipes opposed from both sides of the gate; and
joining each of the two connection pipes to the first opening and to the second opening by welding.

6. The method for producing the gate valve according to claim 5, wherein the forming the openings on the side face of the body is performed by machining.

## Amended claims

### Amended claims under Art. 19.1 PCT

1. (Amended) A gate valve comprising:
a hand wheel, a stem, a gate, a body, and two connection pipes, the gate valve being configured to control a flow of a fluid, wherein
the body has a first opening and a second opening for accommodating each of the two connection pipes, and a third opening for accommodating the gate,
protrusions each having a circular-ring shape are provided on an outer circumference of each of the two connection pipes, and an outer circumference of each protrusion is configured to match to each inner circumference of the first opening and the second opening,
each of the two connection pipes passes through the first opening and the second opening, each end of the two connection pipes being disposed opposed from both sides of the gate, and
each of the two connection pipes is jointed to the body by welding at each of the outer circumferences of the protrusions and each of the inner circumferences of the first opening and the second opening.

2. The gate valve according to claim 1, wherein at least a circumferential portion of the first opening and the second opening of the body has part of a sphere in shape.

3. The gate valve according to claim 1, wherein at a circumferential portion of the first opening and the second opening of the body has part of a circular cone in shape.

4. (Deleted)

5. (Amended) A method for producing a gate valve including: a hand wheel, a stem, a gate, a body, and two connection pipes, the gate valve being configured to control a flow of a fluid,
the method comprising:
producing a plurality of divided body portions of the body by forging;
welding the plurality of divided body portions to form the body;
forming first and second openings each having a circular shape on side faces of the body to allow disposition of each end of the two connection pipes opposed from both sides of the gate;
forming protrusions each having a circular-ring shape are provided on an outer circumference of each of the two connection pipes; and
joining each of the outer circumferences of the protrusions of the two connection pipes to each of inner circumferences of the first opening and the second opening which match to the outer circumferences by welding.

6. The method for producing the gate valve according to claim 5, wherein the forming the openings on the side face of the body is performed by machining.
